## Europäisches Patentamt
## European Patent Office
## Office européen des brevets

(11) Publication number: **0 121 073**
**B1**

## (12) EUROPEAN PATENT SPECIFICATION

(45) Date of publication of patent specification: **22.07.87**

(51) Int. Cl.⁴: **B 29 C 41/04**

(21) Application number: **84101742.9**

(22) Date of filing: **20.02.84**

(54) A process of rotational molding fluoropolymers.

(30) Priority: **07.03.83 US 472540**

(43) Date of publication of application:
**10.10.84 Bulletin 84/41**

(45) Publication of the grant of the patent:
**22.07.87 Bulletin 87/30**

(84) Designated Contracting States:
**DE FR GB IT**

(56) References cited:
US-A-3 329 751
US-A-3 488 747
US-A-3 514 508
US-A-3 852 429
US-A-4 104 357
US-A-4 167 382

MODERN PLASTICS ENCYCLOPEDIA, vol. 56,
no. 10a, 1979-80, McGRAW Hill, pp. 30, 504, 505

(73) Proprietor: **Ausimont U.S.A., Inc.**
**44 Whippany Road**
**CN 1838, Morristown, N.J. 07960 (US)**

(72) Inventor: **Miller, William Albert**
**1246 Evergreen Drive**
**Bridgewater New Jersey 08807 (US)**
Inventor: **Chandrasekaran, Swayambu**
**50 Crane Road**
**Mountain Lakes New Jersey 07046 (US)**
Inventor: **Minhas, Pritam Singh**
**5 Deerfield Road**
**Memdham New Jersey 07945 (US)**
Inventor: **Hutton, Leo Theodore**
**391 Dover Chester Road**
**Ironia New Jersey 07845 (US)**

(74) Representative: **Baillie, Iain Cameron et al**
**c/o Ladas & Parry Isartorplatz 5**
**D-8000 München 2 (DE)**

# 0 121 073

**Description**

The present invention is in the field of rotational molding; more particularly, the invention relates to rotationally molded articles and a method to rotationally mold articles having a layer made of a composition containing a fluoropolymer composition.

Rotational molding, also known as rotomolding, is used in the manufacture of hollow objects from thermoplastics. In the basic process of rotational molding, solid or liquid polymers are placed in a mold. The mold is first heated and then cooled while being rotated, usually about two perpendicular axes simultaneously. Many polymers can be used in the rotational molding process. Popular polymers for this use are polyolefins such as polyethylene. It is also known to use polycarbonates, crosslinkable polyethylene, nylon, and other materials. In selecting the rotational molding grade formulation, care must be taken to assure that there will not be thermal degradation during the heating cycle. A general discussion on rotational molding is given in MODERN PLASTICS ENCYCLOPEDIA 1979—1980, Volume 56, No. 10A, beginning at Page 381.

It is known to rotationally mold fluoropolymers including the copolymer of ethylene and tetrafluoroethylene, the copolymer of ethylene and chlorotrifluoroethylene, and polyvinylidene fluoride.

SUMMARY OF THE INVENTION

The present invention relates to a process to rotationally mold an article made of a fluoropolymer composition comprising the step of feeding the composition to the cavity of a rotational mold, rotating the mold, heating the composition within the mold, cooling the mold and removing the molded article. Such a process is disclosed in US—A—4167382. According to the present invention the process is characterized in that the composition is a fluoropolymer selected from the group comprising polyvinylidene fluoride, and copolymers of 40 to 60 mol percent ethylene with 40 to 60 mol percent of a halogenated comonomer selected from the group consisting of tetrafluoroethylene, chlorotrifluoroethylene, and mixtures thereof. The fluoropolymer further comprises from 1.5 to 15, preferably from 1.5 to 10, and most preferably from 1.7 to 7 mol percent of hexafluoroisobutylene. Preferred terpolymers include the terpolymer comprising 40 to 60 percent ethylene, 40 to 60 mol percent chlorotrifluoroethylene, and 1.5 to 15 mol percent hexafluoroisobutylene; and the terpolymer comprising 40 to 60 mol percent ethylene, 40 to 60 mol percent tetrafluoroethylene, and 1.5 to 15 mol percent hexafluoroisobutylene. A preferred copolymer is the copolymer of vinylidene fluoride and 1.5 to 15 mol percent hexafluoroisobutylene. The fluoropolymer can be formed into particles, such as pellets or powder, suitable for rotational molding. The particles are rotationally molded to form an article.

The present invention includes a rotationally molded fluoropolymeric article made according to the process disclosed above.

DESCRIPTION OF THE PREFERRED EMBODIMENTS

The present invention is a process of rotationally molding a fluoropolymer, and an article having a layer of the fluoropolymer.

The process of the present invention comprises the steps of rotationally molding a fluoropolymer selected from the group comprising polyvinylidene fluoride, and copolymers of 40 to 60 mol percent ethylene with 40 to 60 mol percent of a halogenated comonomer selected from the group consisting of tetrafluoroethylene, chlorotrifluoroethylene, and mixtures thereof. The fluoropolymer further comprises from 1.5 to 15 mol percent of hexafluoroisobutylene. Preferably there is from 1.5 to 10 and more preferably from 1.7 to 7 mol percent of hexafluoroisobutylene.

The hexafluoroisobutylene has been found to result in an improved process to rotationally mold and further found to improve the physical properties of rotationally molded articles. More specifically the use of hexafluoroisobutylene reduces the shrinkage and thereby helps to reduce resulting warpage of rotationally molded parts. Physical properties such as impact resistance are improved.

It has been found that the hexafluoroisobutylene results in a clear rotationally molded fluoropolymer. This has been illustrated using a 0.32 cm (1/8 inch) thick rotationally molded article made of a terpolymer containing equimolar amounts of ethylene and chlorotrifluoroethylene and additionally hexafluoroisobutylene. A 0.32 cm (1/8 inch) rotationally molded copolymer of ethylene and chlorotrifluoroethylene is opaque white. The addition of 1.2 mol percent of hexafluoroisobutylene results in a translucent article. However, normal size type cannot be read through one side of the article when it is pressed against the opposite side. The addition of about 1.7 mol percent of hexafluoroisobutylene results in an article which is clear or transparent enough to read normal type through one side of the article when a paper containing type is pressed against the opposite side. In the most preferred embodiment of the present invention there is sufficient hexafluoroisobutylene in the polymer to form a rotationally molded transparent article by the present invention. Transparency is measured as the ability to easily read normal size type through one side of the rotationally molded article when the paper containing the type is pressed against the opposite side.

Hexafluoroisobutylene, also know as 3,3,3-trifluoro-2-trifluoromethyl propene has the formula $(CF_3)_2C{=}CH_2$. It can be made according to the process disclosed in U.S. Patent No. 3,894,097, hereby incorporated by reference. Other methods to prepare hexafluoroisobutylene are known in the art and include the method described by Kauffman, et al. in J. Org. Chem. 31, 3090 (1966). Briefly, its preparation

2

involves refluxing hexafluoro-2-methyl-2-propanol with phosphorous pentachloride to obtain the desired hexafluoroisobutylene as non-condensed overhead product, together with concurrently formed hydrogen chloride. The hydrogen chloride can be removed from the crude overhead product by conventional techniques, such as by distillation or by scrubbing with alkaline media.

The ethylene, tetrafluoroethylene, chlorotrifluoroethylene, and vinylidene fluoride monomers required for making copolymers useful in the present invention are commercially available.

The preferred fluoropolymers useful in the process of the present invention can generally be made by the controlled addition of hexafluoroisobutylene to reactors in which vinylidene fluoride, or in which ethylene and halogenated comonomers including chlorotrifluoroethylene, tetrafluoroethylene or mixtures thereof are to be polymerized by methods known in the art.

The copolymers of the present invention may be prepared using known polymerization methods, such as, e.g. the method disclosed in Neucleonics, September 1964, pp. 72—74, for making high melting 1:1 alternate copolymer of ethylene and chlorotrifluoroethylene using radiation as catalyst at 0°C; as shown in British Patent 949,422 by bulk copolymerization of ethylene with halogenated comonomer at temperatures between −80°C to +50°C using oxygen-activated alkyl boron catalysts; or as shown by Ragazzini et al.'s US—A—3,371,076 and 3,501,446. They may also be prepared by batchwise bulk copolymerization of the monomers at temperatures of about 0°C, say between −20° to +20°C, at superatmospheric pressure in an agitated pressure vessel, preferably in the presence of inert chlorofluorocarbon solvent, by charging the vessel with hexafluoroisobutylene and the halogenated monomer and admitting gaseous ethylene into the vessel, using organic peroxide type initiators effective at such temperatures and, if desired, in the presence of small amounts of chain transfer agents such as chloroform or heptane to modify molecular weight. The copolymers of the present invention may also be prepared by polymerization in aqueous suspension or dispersion using known procedures.

The amount of the hexafluoroisobutylene contained in the fluoropolymer affects the properties of the fluoropolymer. Typical properties of polyvinylidene fluoride, chlorotrifluoroethylene and tetrafluoroethylene are reviewed in *Modern Plastics Encyclopedia*, Vol. 56 No. 10A, McGraw Hill, 1979-80 at pp. 30, 504 and 505, hereby incorporated by reference. The addition of hexafluoroisobutylene reduces the polymer melt temperature. Polyvinylidene fluoride has a melt temperature of 156°C; ethylene chlorotrifluoroethylene copolymer has a melt temperature of 245°C, and ethylene tetra-fluoroethylene has a melt temperature of 270°C. The addition of the hexafluoroisobutylene will lower the melt temperature and correspondingly the molding temperature of the process of the present invention.

The fluoropolymer can be fed into the mold in powder or pellet form. Pellets can be from about 0.08 × 0.08 cm (1/32 by 1/32 inch) (or about 0.08 cm (1/32 inch) average diameter) to about 0.32 × 0.32 cm (1/8 by 1/8 inch) (or about 0.32 cm (1/8 inch) average diameter). A preferred pellet shape is a cylindrical pellet from about 0.08 to 0.16 cm (1/32 to 1/16) inch in diameter, by about 0.16 to 0.32 cm (1/16 to 1/8 inch) long. The powder can be as small as 50 mesh with a 35 mesh powder preferred.

The composition is formed into particles suitable for rotational molding and is fed into the rotational mold. The composition is heated within the mold as it is rotated. Typically, the mold is indexed into an oven and heated with hot air while the mold rotates. Generally, the rotational mold rotates simultaneously along two perpendicular axes. The mold is heated until the particles within the mold melt and flow together on the inside surface of the mold. The mold is then cooled and the molded article is removed.

The fluoropolymer composition can be processed in most commercial rotational molding machines. The oven air temperature should be high enough to melt the fluoropolymer in the rotational mold. Preferably, the fluoropolymer is heated to at least 30°C and more preferably 50°C above the melting point. For example, for a terpolymer of equimolar amounts of ethylene and chlorotrifluoroethylene a preferred oven temperature is from (228°C) 550°F to about (343°C) 650°F and more preferably from (295°C) 565°F to about (329°C) 625°F. The temperature must be high enough for the particles to fuse together to form a smooth inner surface of the molded article. The mold is heated by suitable means known in the art. Generally, the mold rotates within a forced air circulating oven.

After the heating step the mold is cooled. The part must be cool enough to be easily removed from the mold and retain its shape. Preferably, the mold is removed from the oven while continuing to rotate. Cool air is first blown on the mold. The air can be at ambient temperature. Cool air is initially used to prevent the mold from experiencing thermal shock. The initial cool air step prevents part warpage, and premature release of the part from the mold surface which can cause stresses in the part. After the air has started to cool the mold for a controlled time period, a water spray can be used. The water cools the mold more rapidly. The water used can be at cold water tap temperature, usually from 4°C (40°F) to 16°C (60°F). The water step is used to cool the part rapidly. It is believed this reduces the formation of crystals and enhances impact resistance of the part. After the water cooling step, another air cooling step may optionally be used. This is usually a short step during which the equipment dries with heat removed during the evaporation of the water.

Typical cooling cycle for the process of the present invention for rotationally molding fluoropolymers are one to two minutes of forced ambient air cooling followed by three to 10 minutes of water cooling and optionally 1 to 3 minutes of air drying.

The heating and cooling cycle times will depend on the equipment used and the article molded. Specific factors include the part thickness and mold material. Typical conditions for a (0.32 cm) 1/8 inch

# 0 121 073

thick part made of terpolymer of equimolar amounts of ethylene and chlorotrifluoroethylene with 1.7 to 7 mol percent of hexafluoroisobutylene made in a steel mold are to heat the part in an oven with air at 329°C (625°F) for 25 minutes. The part is cooled in ambient temperature forced air for 2 minutes and then in a tap water spray at 10°C (50°F) for 5 minutes. Optionally, the part is cooled in ambient temperature forced air for an additional 2 minutes.

During the heating and cooling steps, the mold containing the molded article is continually rotated along two perpendicular axes. The rate of rotation of the mold about each axis is limited by machine capability and the shape of the article being molded. A typical range of operation which can be used with the present invention is to have a ratio rotation of the major axis to the minor axis of from 1:2 to 1:10, and 2:1 to 10:1.

Preferably, the rotational molding is conducted under an inert atmosphere within the mold. However, this is not necessary, although it is preferred. When it is desired to use an inert atmosphere, the mold cavity can be purged with nitrogen. Most rotational molding machines have arms which are drilled for gas injection, so that all that is necessary is to connect a nitrogen gas cylinder to the arm, using the rotary valves in the connection. Alternatively, dry ice can be added to the mold cavity at the time the resin is charged to the mold. The dry ice will sublime during the heating cycle and provide an inert atmosphere.

The mold surface can be sprayed or coated with a mold release coating. A preferred mold release agent is a baked-on silicon based mold release coating, such as Freekote®. This coating is baked for 15—20 minutes at 288°C (550°F) to 345°C (650°F). The mold is cooled and sanded on the inside. The sanded surface allows the composition too maintain contact during molding and not release too readily and warp while being cooled. Yet upon cooling, the molded article easily releases. A vent can be used to avoid pressure buildup on the inside of the mold during the heating step.

The present invention includes rotationally molding fluoropolymer articles. Rotationally molded fluoropolymer articles have been made having wall thickness of from 0.05 to 0.38 cm (0.020 to .150 inches). Molded parts can be stress relieved by heating the part in an oven at 107 to 121°C (225° to 250°F) for a short period of time.

Several examples are set forth below to illustrate the nature of the invention and the manner of carrying it out. However, the invention should not be considered as being limited to the details thereof.

In the following examples a McNeil-Akron Model No. 500/48 Laboratory Rotational Molding Machine was used. This machine has a 227 Kg (500 lb.) capacity and a 122 cm (48 inch) swing envelope. The mold rotates simultaneously about 2 perpendicular axes, a major axis and a minor axis. The moldings made were 30.5 cm (12 inch) cubes. The mold for the 30.5 cm (12 inch) cube was made of cast aluminium. The mold was equipped with a gas inlet port and a vent port. Polymer was charged when the mold was open.

In each of the examples the following process was generally followed with specific details and variations noted in the Table.

The mold was charged with 2.5 kg (5.5 pounds) of 35 mesh powder of the polymer. The vent was open to the atmosphere and plugged loosely with fiberglass to prevent molding powder from escaping.

The mold was indexed into the heating oven set at a desired temperature and rotated biaxially for 25 minutes at a rotation ratio of 4:1 and major axis speed of 6 rpm. The rotation ratio is defined as the number of rotations made by the major axis for one rotation of the mold (or minor axis). At the end of the first heat cycle the mold was indexed back out to the work area while rotating. The mold was indexed into the cooling station and cooled while being biaxially rotated.

## Examples 1—3

In the Examples and Comparatives the fluoropolymer which was rotationally molded had equimolar amounts of ethylene and chlorotrifluoroethylene. The amount of hexafluoroisobutylene (HFIB) included in the Examples and Comparatives is summarized in the Table below in mol% in the terpolymer, and wt% based on grams of HFIB fed to the reactor per 100 grams of chlorotrifluoroethylene to form the polymer. The melt index (MI) measured as gms/10 minutes according to ASTM Test No. 1238 run at 275°C under a piston load of 2160 grams, and polymer melting temperature are also indicated in the Table. The heating temperature (Molding T (°F)) used during the rotational molding, and molded article appearance and clarity are also summarized in the Table. With regard to clarity, Opaque means that little or no light passes through the 0.32 cm (1/8 inch) thick sample. Translucent means that light can pass through but a sheet of paper containing normal type pressed against one side of the molded article wall cannot be read from the other side; and Transparent means that such type can be easily read. The appearance is also noted in the Table. Distortion is an indication of shrinkage.

4

TABLE

| Example | HFIB | | MI | Melt T (°C) | Molding T°F/(°C) | Clarity | Appearance |
|---------|------|------|-----|-------------|------------------|---------|------------|
| | Mol % | Wt % | | | | | |
| Comp 1 | — | — | 15 | 240 | 600/(316) | Opaque white | Badly distorted cracked |
| Comp 2 | 1.1 | 2.5 | 19 | 225 | 580/(304) | Translucent | Slight distortion |
| Ex 1 | 1.7 | 3.75 | 12 | 221 | 580/(304) | Transparent | Very slight distortion |
| Ex 2 | 2.2 | 5 | 17 | 218 | 565/(296) | Transparent | No distortion |
| Ex 3 | 3.2 | 7 | 14 | 212 | 550/(288) | Transparent | No distortion |

**Claims**

1. A process to rotationally mold an article made of a fluoropolymer composition comprising:
feeding the composition to the cavity of a rotational mold;
rotating the mold;
heating the composition within the mold;
cooling the mold; and
removing the molded article
characterized in that the composition is a fluoropolymer selected from the group comprising polyvinylidene fluoride, and copolymers of 40 to 60 mol percent ethylene with 40 to 60 mol percent of a halogenated comonomer selected from the group consisting of tetrafluoroethylene, chlorotrifluoroethylene, and mixtures thereof, the fluoropolymer further comprising a comonomer of from 1.5 to 15 mol percent of hexafluoroisobutylene.

2. The process as recited in claim 1 wherein there is from 1.5 to 10 mol percent hexafluoroisobutylene.

3. The process as recited in claim 1 wherein there is at least 1.7 mol percent hexafluoroisobutylene to result in a transparent article.

4. A rotationally molded fluoropolymeric article characterized in that the fluoropolymer selected from the group comprises polyvinylidene fluoride, and copolymers of 40 to 60 mol percent ethylene with 40 to 60 mol percent of a halogenated comonomer selected from the group consisting of tetrafluoroethylene, chlorotrifluoroethylene, and mixtures thereof, the fluoropolymer further comprising from 1.5 to 15 mol percent of hexafluoroisobutylene.

**Patentansprüche**

1. Verfahren zum Drehformen eines Gegenstandes aus einer Fluorpolymerzusammensetzung in einer Form, in dem
die Zusammensetzung in den Hohlraum einer Drehform chargiert wird;
die Form gedreht wird;
die Zusammensetzung in der Form erhitzt wird;
die Form abgekühlt wird; und
der geformte Gegenstand entformt wird;
dadurch gekennzeichnet, daß die Zusammensetzung ein Fluorpolymer ist, das aus der Gruppe ausgewählt ist, die das Polyvinylidenfluorid umfaßt sowie Copolymere mit 40 bis 60 Molprozent Ethylen und 40 bis 60 Molprozent eines halogenierten Comonomers, das aus der Gruppe ausgewählt ist, die aus dem Tetrafluorethylen, dem Chlortrifluorethylen und den Gemischen derselben besteht, wobei das Fluorpolymer ferner in einer Menge von 1,5 bis 15 Molprozent Hexafluorisobutylen als Comonomer enthält.

2. Verfahren nach Anspruch 1, dadurch gekennzeichnet, daß 1,5 bis 10 Molprozent Hexafluorisobutylen vorhanden sind.

3. Verfahren nach Anspruch 1, dadurch gekennzeichnet, daß mindestens 1,7 Molprozent Hexafluorisobutylen vorhanden sind, so daß ein durchsichtiger Gegenstand erhalten wird.

4. In einer Form drehgeformter Fluorpolymerartikel, dadurch gekennzeichnet, daß das Fluorpolymer aus der Gruppe ausgewählt ist, die das Polyvinylidenfluorid umfaßt sowie Copolymere mit 40 bis 60 Molprozent Ethylen und 40 bis 60 Molprozent eines halogenierten Comonomers, das aus der Gruppe

**0 121 073**

ausgewählt ist, die aus dem Tetrafluorethylen, dem Chlortrifluorethylen und den Gemischen derselben besteht, wobei das Fluorpolymer ferner in einer Menge von 1,5 bis 15 Molprozent Hexafluorisobutylen enthält.

**Revendications**

1. Un procédé pour mouler par rotation un article d'une composition de fluoropolymère consistant à introduire la composition dans la cavité d'un moule rotatif;
à faire tourner le moule;
à chauffer la composition à l'intérieur du moule;
à refroidir le moule; et
à retirer l'article moulé;
caractérisé en ce que la composition est un fluoropolymère choisi parmi le fluorure de polyvinylidène et les copolymères de 40 à 60 mol % d'éthylène avec 40 à 60 mol % d'un comonomère halogéné choisi parmi le tétrafluoroéthylène, le chlorotrifluoroéthylène et leurs mélanges, le fluoropolymère comprenant comme autre comonomère de 1,5 à 15 mol % d'hexafluoroisobutylène.

2. Le procédé selon la revendication 1, dans lequel il y a de 1,5 à 10 mol % d'hexafluoroisobutylène.

3. Le procédé selon la revendication 1, dans lequel il y a au moins 1,7 mol % d'hexafluoroisobutylène pour conduire à un article transparent.

4. Un article en fluoropolymère moulé par rotation, caractérisé en ce que la fluoropolymère est choisi parmi le fluorure de polyvinylidène et les copolymères de 40 à 60 mol % d'éthylène avec 40 à 60 mol % d'un comonomère halogéné choisi parmi le tétrafluoroéthylène, le chlorotrifluoroéthylène et leurs mélanges, le fluoropolymère comprenant en outre de 1,5 à 15 mol % d'hexafluoroisobutylène.

6